# EUROPÄISCHE PATENTSCHRIFT

(11) **EP 1 247 278 B1**
(45) Veröffentlichungstag und Bekanntmachung des Hinweises auf die Patenterteilung: **20.08.2003**
(21) Anmeldenummer: 00983249.4
(22) Anmeldetag: 07.12.2000
(51) Int. Cl.: G11B 7/26, B29C 39/14

(54) **VERFAHREN ZUR HERSTELLUNG VON OPTISCHEN SPEICHERMEDIEN**
METHOD FOR PRODUCING OPTICAL STORAGE MEDIA
PROCEDE DE FABRICATION DE SUPPORTS D'ENREGISTREMENT OPTIQUES

(30) Priorität: 13.01.2000 DE 10001160
(43) Veröffentlichungstag der Anmeldung: 09.10.2002
(73) Patentinhaber: topac MultimediaPrint GmbH, 33332 Gütersloh (DE)
(72) Erfinder: ROSOWSKI, Ralf, 33607 Bielefeld (DE)
(74) Vertreter: Prietsch, Reiner, Dipl.-Ing.
(86) Internationale Anmeldenummer: EP0012358
(87) Internationale Veröffentlichungsnummer: WO01052252

(56) Entgegenhaltungen:
- EP-A- 0 408 283
- WO-A-99/12160
- DE-A- 19 746 268
- US-A- 5 673 251

## Beschreibung

Die Erfindung betrifft einerseits ein Verfahren zur Herstellung eines Substrats zur Fertigung von optischen Speichermedien, in denen die Informationen seriell in Form von Pits and Lands gespeichert sind und andererseits ein Verfahren zur Fertigung derartiger optischer Speichermedien.

Zu den bekanntesten optischen Speichermedien des hier interessierenden Typs gehören die CD-Audio und die CD-ROM, deren mechanischen und elektrischen Paramter weitgehend standardisiert und in der DIN EN 60908 bzw. IEC 908 + A1 und dem Yellow Book niedergelegt sind. Die Speichermedien werden im Spritzgießverfahren aus Polycarbonat von einer Prägematrize abgeformt, auf der die abgeformte Oberflächenstruktur in Form der Pits und Lands tragenden Seite metallisiert, auf der gleichen Seite mit einem Schutzlack versehen und meist mit einer Inhaltsangabe usw. bedruckt. Ausgelesen wird die Information von der gegenüberliegenden, transparenten Seite aus, also durch das Polycarbonat hindurch.

Es hat bereits Versuche gegeben, den vorstehend kurz skizzierten, diskontinuierlichen Fertigungs- oder Replikationsprozeß durch einen kontinuierlichen Prozeß zu ersetzen, vgl. WO 97/12279. Der Grundgedanke ist, die das Negativ der zu erzeugenden Oberflächenstruktur tragende Matrize auf den Umfang einer Walze aufzuspannen und zwischen dieser Walze und einer Gegendruckwalze ein von einer Rolle abgezogenes Kunststofffolienband hindurchzuführen, um so die Oberflächenstruktur durch Prägen zu übertragen. Nach diesseitiger Kenntnis ist dieses Verfahren jedoch nicht bis zur Produktionsreife entwickelt worden.

Zur Herstellung bestimmter, mikrooptischer Oberflächenstrukturen, insbesondere zur Herstellung von Prägehologrammen, sind zwar kontinuierliche Verfahren bekannt, jedoch ist deren Übertragung auf die Herstellung von optischen Speichermedien der eingangs genannten Gattung bisher nicht versucht worden.

Z.B. ist aus der DE 41 32 476 A1 ein Verfahren zur gleichzeitigen Replikation und direkten Applikation von Hologrammen und anderen Beugungsgittern auf einen Bedruckstoff bekannt, bei dem auf letzteren mindestens eine strahlungshärtbare Lackschicht aufgetragen und mittels dieser die Oberflächenstruktur von einer auf einer Hohlwalze aufgespannten Matrize abgeformt wird. Die Lackschicht soll dann gleichzeitig mit dem Abformen durch die UV-transparente Hohlwalze und die ebenfalls UV-transparente Matrize hindurch mittels UV-Licht ausgehärtet werden. Die praktische Verwirklichung dieses Verfahrens scheitert jedoch an den hohen Kosten einer UV-transparenten Hohlwalze und einer ebensolchen Matrize.

Ein weiteres Verfahren zur Herstellung mikrooptischer Oberflächenstrukturen, z.B. Hologrammen, ist aus der DE 197 46 268 A1 bekannt. Wie bei dem zuvor genannten Verfahren wird auf eine Kunststofffolie eine strahlungshärtbare Lackschicht aufgetragen. Die Viskosität dieser Lackschicht wird während des Auftragens und des anschließenden Abformens durch geregelte Wärmezufuhr auf einen vorbestimmten Wert eingestellt und konstant gehalten. Noch während des Abformens wird die Lackschicht durch Bestrahlung mit UV-Licht ausgehärtet. Das Verfahren ist also nur mit Speziallacken ausführbar. Des weiteren setzt die Einstellung und Konstanthaltung einer bestimmten Viskosität des Lackes eine sehr leistungsfähige und schnelle Regelung voraus.

Aus den US 4 758 296 und 4 906 315 sind weitere Verfahren zur kontinuierlichen Herstellung von Oberflächenreliefhologrammen bekannt, die auf der Abformung eines als Endlosband ausgebildeten Masterhologramms durch Auftrag einer strahlungshärtbaren Kunstharzschicht, Aushärten des Kunstharzschicht noch im Kontakt mit dem Masterhologramm und anschließende Abnahme mittels eines herangeführten Transferbandes aus Polyester beruhen.

Dokument WO-A-9912160 beschreibt ein Verfahren nach dem Oberbegriff der Ansprüche 1 und 2.

Bislang ging die Fachwelt davon aus, daß diese bekannten Verfahren zu aufwendig und/oder zu ungenau für die Herstellung von optischen Speichermedien sind, weil deren Pits, genauer gesagt die Pit/Land-Übergänge, sehr genau repliziert werden müssen, denn jeder einzelne Pit/Land-Übergang verkörpert ein binäres Informationselement, wohingegen bei einem Hologramm bekanntlich eine ungenaue Replikation, vereinfacht gesprochen, nicht zu einem Informations- sondern nur zu einem Kon-trastverlust führt.

Der Erfindung liegt die Aufgabe zugrunde, ein Verfahren zu schaffen, das eine zumindest semi-kontinuierliche Herstellung von optischen Speichermedien ermöglicht.

Eine erste Lösung dieser Aufgabe besteht in einem Verfahren, das sich dadurch auszeichnet, daß ein Kunststofffolienband kontinuierlich mit einem flüssigen, UV-härtbaren Material in einer vorgegebenen Schichtdicke beschichtet wird, daß anschließend die Beschichtung des Bandes durch Wärmezufuhr im ggf. getakteten Durchlauf bis zum Erreichen eines nicht mehr fließfähigen jedoch noch prägbaren Zustandes getrocknet wird und daß das beschichtete Band zur weiteren Verwendung aufgewickelt wird.

Das vorgeschlagene Verfahren unterscheidet sich von den einleitend behandelten, bekannten Verfahren zur Herstellung von Prägehologrammen, Beugungsgittern, Mikrolinsen usw. dadurch, daß die Beschichtung des Bandes nicht ausgehärtet sondern lediglich getrocknet wird, uzw. soweit, daß das beschichtete Band sich einerseits aufwickeln läßt, ohne daß die einzelnen Lagen oder Windungen aneinander kleben, andererseits die Beschichtung aber noch prägbar ist. Dabei ist unter "prägbar" zu verstehen, daß das Oberflächenrelief in Form der Pits und Lands von einer entsprechenden Prägematrize mit der erforderlichen hohen Genauigkeit abgenommen werden kann. Dieser Prägevorgang kann zu einem späteren Zeitpunkt nach bekannten Techniken, z.B. der Form erfolgen, daß das beschichtete Band, also das Substrat, abgewickelt und zwischen zwei Walzen hindurchgeführt wird, von denen die der Beschichtungsseite zugewandte Walze die Matrize trägt. Anschließend wird die Beschichtung ausgehärtet, die geprägte Fläche aus dem Substrat gestanzt und zu einem gebrauchsfertigen Speichermedium weiterverarbeitet. Da das Beschichten und Trocknen wesentlich mehr Zeit in Anspruch nimmt als der Prägevorgang und alle darauffolgenden Schritte, hat das Verfahren in dieser Ausgestaltung den Vorteil, daß die Herstellung des prägbaren Substrats und die Herstellung des eigentlichen Speichermediums sowohl zeitlich als auch örtlich voneinander getrennt und damit bedarfsgerecht optimiert erfolgen können. Z.B. können also zwei oder mehr Anlagen das Substrat auf Vorrat fertigen, das dann in einer einzigen nachgeordneten Anlage zu Speichermedien weiterverarbeitet wird.

Wenn es auf diesen Vorteil nicht ankommt, können die Speichermedien statt nach dem vorstehend beschriebenen semikontinuierlichen Verfahren auch nach einem kontinuierlichen Verfahren gefertigt werden, das sich erfindungsgemäß dadurch auszeichnet, daß ein Kunststofffolienband kontinuierlich mit einem flüssigen, UV-härtbaren Material in einer vorgegebenen Schichtdicke beschichtet wird, daß anschließend die Beschichtung des Bandes durch Wärmezufuhr im ggf. getakteten Durchlauf bis zum Erreichen eines nicht mehr fließfähigen jedoch noch prägbaren Zustandes getrocknet wird, daß das beschichtete Band zwischen zwei Walzen hindurchgeführt wird, von denen die der Beschichtungsseite zugewandte Walze ein Oberflächenrelief trägt, das das Negativ mindestens eines Nutzens des Oberflächenreliefs des zu fertigenden Speichermediums ist und dieses in die Beschichtung prägt, daß das Band anschließend zum Aushärten der Beschichtung unter einer UV-Strahlungsquelle hindurchgeführt wird, daß die Nutzen aus dem Band gestanzt werden und daß gleichzeitig oder in einem getrennten Schritt in die Nutzen ein Mittelloch gestanzt wird.

Dieses Verfahren liefert als Endprodukt Speichermedien, die in dieser Form bereits abspielfähig sein können.

Als Beschichtungsmaterial kann ein lösungsmittelhaltiges strahlungsvernetzbares Polymer eingesetzt werden (Anspruch 3). Geeignete Polymere sind als sog. Photopolymere im Stand der Technik bekannt.

Alternativ und bevorzugt kann als Beschichtungsmaterial ein lösungsmittelhaltiges, strahlungsvernetzbares Sol-Gel eingesetzt werden (Anspruch 4). Geeignete Sol-Gel-Systeme auf der Basis von SiO₂ sind z.B. aus dem Aufsatz "Optical Disc Substrate Fabricated by the Sol-Gel-Method" von A. Matsuda et al., erschienen in Key Engeneering Materials, Vol. 150 (1958), Seite 111 bis 120 bekannt, allerdings nur zur Herstellung von vorformatierten, beschreibbaren optischen Speichermedien in Form einer entsprechend beschichteten Glasplatte. Anstelle von SiO₂ können auch andere, inerte Feststoffe eingesetzt werden, deren Korngröße im Nanometerbereich liegt. Besonders bewährt hat sich TiO₂.

Die Viskosität des Beschichtungsmaterials liegt im flüssigen Zustand vorzugsweise zwischen 10 und 100 mPa/s und im weitgehend verfestigten Zustand, also nach dem Trocknen, zwischen 20 und 100 Pa/s (Ansprüche 5 und 6).

Die Schichtdicke des Beschichtungsmaterials ist nicht kritisch. Für das flüssige Material kann sie zwischen 2 und 100 µm und für das weitgehend verfestigte Material, also nach dem Trocknen, zwischen 1 und 50 µm liegen (Ansprüche 7 und 8).

Ähnliches gilt für die Transportgeschwindigkeit des zu beschichtenden Bandes. Sie richtet sich nach dem gewählten Beschichtungsverfahren und vor allem der Dauer des Trocknungsschrittes unter Berücksichtigung der Schichtdicke, der maximal anwendbaren Heizleistung zur Erzielung einer gleichmäßigen Trocknung über die gesamte Schichtdicke und der für die Trocknung zur Verfügung stehenden Streckenlänge. In Betracht kommt insbesondere eine Transportgeschwindigkeit zwischen 20 und 50 m/min (Anspruch 9).

Analoge Optimierungsüberlegungen gelten für die Trocknungstemperatur, deren untere Grenze unter Inkaufnahme einer langen Trocknungszeit bei Raumtemperatur liegt und deren obere Grenze durch die chemische Stabilität des Beschichtungsmaterials sowie die Verdunstungseigenschaften des Lösungsmittels bestimmt wird. Vorzugsweise liegt die Trocknungstemperatur zwischen 50 und 90°C (Anspruch 10).

Im Fall eines kontinuierlichen Verfahrens ist die Prägegeschwindigkeit zwangsläufig gleich der Transportgeschwindigkeit des zu beschichtenden Bandes im Beschichtungs- und Trocknungsbereich. Wird hingegen in das entsprechend dem Verfahren nach Anspruch 1 hergestellte Substrat geprägt, so ist die maximale Prägegeschwindigkeit nur durch die Parameter der verwendeten Anlage begrenzt. Die Prägegeschwindigkeit kann z.B. zwischen 10 und 50m/min betragen (Anspruch 11).

Zur Strahlungsvernetzung kann das Beschichtungsmaterial, bevorzugt das lösungsmittelhaltige Sol-Gel, mit 40 bis 1000 mJ/cm² für z.B. eine Sekunde bestrahlt werden (Anspruch 12). Anzustreben ist eine möglichst rasche Vernetzung und damit endgültige Fixierung der geprägten Oberflächenstruktur. Die maximal einsetzbare Strahlungsleistung und die Dauer der Bestrahlung hängen naturgemäß von der Art des verwendeten strahlungsvernetzbaren Polymeren ab.

Das gleiche gilt für den Wellenlängenbereich der eingesetzten Strahlung. Für übliche, strahlungsvernetzbare Polymere kann dieser zwischen ca. 200 und ca. 500 nm betragen (Anspruch 13).

Zweckmäßig wird die Schichtdicke der Beschichtung nach dem Trocknen gemessen und in einen Regelkreis zur Konstanthaltung dieser Schichtdicke eingespeist (Anspruch 14).

Ebenso kann die Tiefe des Oberflächenreliefs nach der Strahlungshärtung gemessen und in einen den Andruck der Prägewalze steuernden Regelkreis eingespeist werden (Anspruch 15). Geeignete interferometrische Meßverfahren sind z.B. zur Steuerung des Entwicklungsprozesses des Photoresists eines beschriebenen Glasmasters bekannt.

Bei der Bemessung der Geometrie der Pits, vor allem deren Tiefe, ist wichtig, ob die erzeugte Oberflächenstruktur eine Grenzfläche zu Luft oder zu einer transparenten Schutzschicht bildet, deren Brechungsindex dann zu berücksichtigen ist.

Die nach dem Verfahren nach der Erfindung hergestellten Nutzen können zur Erhöhung der Reflexion zumindest einseitig metallisiert werden (Anspruch 16), z.B. in dem bekannten Aluminiumsputterverfahren. Wenn das Beschichtungsmaterial einen ausreichend hohen Brechungsindex hat, also z.B. im wesentlichen aus TiO₂ mit einem Brechungsindex von ca. 2 bis 2,4 besteht und keine Schutzschichten aufgebracht werden, kann auf die Metallisierung jedoch verzichtet werden, weil die an der Grenzfläche TiO₂/Luft entstehende Reflexion bereits zu einem ausreichend großen CA-Signal führt. Dies ist für Speichermedien, die normalerweise nur einmal ausgelesen werden, z.B. um eine bestimmte Software auf die Festplatte zu laden, völlig ausreichend.

Sollen andererseits Speichermedien gefertigt werden, die mehrfach ausgelesen werden, so empfiehlt es sich, die profilierte Seite der Nutzen mit einem Schutzlack zu versehen (Anspruch 17), alternativ eine Schutzfolie aufzulaminieren.

Die nach dem Verfahren nach der Erfindung hergestellten optischen Speichermedien können eine erheblich geringere Dicke haben, als die bisher üblichen Speichermedien z.B. des CD- und CD-ROM-Typs. Auf deren genormte Dicke von 1,2 mm sind jedoch die Autofocus-Servos der üblichen Lesegeräte eingestellt. Deshalb kann es notwendig sein, jeden Nutzen mit einem Außenring und einem Innenring zu versehen (Anspruch 18) um die informationstragende Schicht in die Autofocusebene eines üblichen Lesegerätes zu bringen.

Als Kunststoffe für das Kunststofffolienband kommen insbesondere solche aus der Gruppe der Polyester oder Polycarbonate in Betracht (Anspruch 19).

Die Erfindung wird nachfolgend anhand der Zeichnung erläutert, die stark schematisierte Ausführungsbeispiele und deren Einzelheiten wiedergibt. Es zeigt:
- Fig. 1: das Schema einer Anlage zur kontinuierlichen Herstellung eines Bandes mit einer Abfolge von je einem optischen Speichermedium entsprechenden Nutzen,
- Fig. 2: einen Schnitt durch eine erste Ausführungsform des Speichermediums im Bereich eines Pits, mit vereinfacht dargestelltem Strahlengang des Lesestrahls,
- Fig. 2a: die Einzelheit "X" in Fig. 2 in vergrößertem Maßstab,
- Fig. 3: einen Schnitt wie in Fig. 2 durch eine zweite Ausführungsform,
- Fig. 4: einen Adapter zum Auslesen des Speichermediums in einem CD- oder CD-ROM-Laufwerk nach dem Stand der Technik.

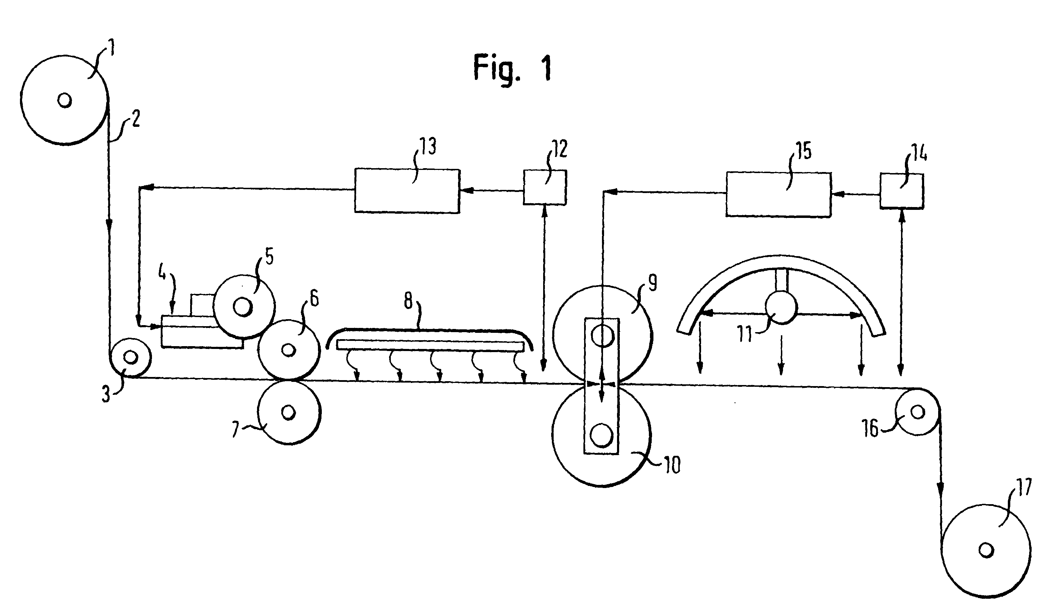

Die in Figur 1 dargestellte Anlage umfaßt eine Abwickelwalze 1, von der eine Kunststofffolie 2, z.B. eine Polyesterfolie mit einer Breite von ca. 1 m und einer Dicke von 50 µm abgezogen wird. Nach Umlenkung um eine Umlenkwalze 3 wird das Band 2 zwischen einer Beschichtungswalze 6 und einer Gegendruckwalze 7 hindurchgeführt. Die Beschichtungswalze 6 trägt auf das Band eine Sol-Gel-Schicht mit einer Stärke von etwa 1 µm auf. Das Sol-Gel ist in einem Vorratsbehälter 4 enthalten, in den eine Näpfchenwalze 5 eintaucht, die das anhaftende Sol-Gel auf die Beschichtungswalze 6 überträgt. Der Auftrag einer Schicht nach diesem Prinzip ist grundsätzlich aus der Druckindustrie bekannt und wird daher nicht im einzelnen erläutert. Auch andere, bekannte Beschichtungsverfahren sind anwendbar.

Das beschichtete Band durchläuft anschließend eine Trocknungsstation 8, in der das Lösungsmittel durch Wärmezufuhr, z.B. durch Infrarot-Bestrahlung, zumindest weitgehend entfernt wird. Am Ausgang des Trocknungsstation 8 wird die Schichtdicke der getrockneten, jedoch noch prägefähigen Beschichtung mittels des angedeuteten, interferometrischen Schichtdickenmessers 12 gemessen, dessen Ausgangssignal in einen Regler 13 eingespeist wird, der in an sich bekannter Weise an geeigneter Stelle in die Beschichtungsstation eingreift, um die Schichtdicke auf dem Sollwert zu halten. Anschließend kann das beschichtete, prägefähige Band aufgewickelt und zur weiteren Verwendung bereitgehalten werden (nicht dargestellt). Stattdessen kann das beschichtete Band, wie dargestellt, sogleich einer Prägestation zugeführt werden. Diese umfaßt eine Prägewalze 9, deren Außenumfang von einer Matrize gebildet wird, die das Negativ der in der Beschichtung des Bandes zur erzeugenden Oberflächenstruktur trägt. Der Prägewalze 9 gegenüber liegt eine Andruckwalze 10. Auf die Prägestation folgt eine Aushärtestation 11, die insbesondere aus einer oder mehreren UV-Lichtquellen bestehen kann. Diese lösen die Strahlungsvernetzung des in der Beschichtung enthaltenen Photopolymeren aus. Nach der Aushärtestation 11 wird die Tiefe der Pits über den interferometrischen Pittiefenmesser 14 gemessen. Dessen Ausgangssignal wird einem Regler 15 zugeführt, der abhängig von dem Ergebnis des Vergleiches des Istwertes mit einem Sollwert den Andruck der Prägewalze 9 in Richtung der Einhaltung des Sollwertes verändert. Nach einer Umlenkwalze 16 wird das mit der Oberflächenstruktur versehende Band entweder zur weiteren Verwendung auf einer Aufwickelwalze 17 aufgewickelt oder weiterverarbeitet. Die nicht dargestellte Weiterverarbeitung umfaßt das Ausstanzen der Nutzen auf dem Band 2, das gleichzeitige oder spätere Ausstanzen des Mittellochs, erforderlichenfalls einen Metallisierungsvorgang, das Aufbringen eines Schutzlacks oder das Auflaminieren einer Schutzfolie und das Anbringen eines Adapters, der z.B. aus einem Innen- und einem Außenring bestehen kann und das hergestellte Speichermedium, das erheblich dünner als eine konventionelle CD oder CD-ROM sein kann, in die Lese- oder Autofocusebene eines üblichen Laufwerks oder Lesegerätes hebt.

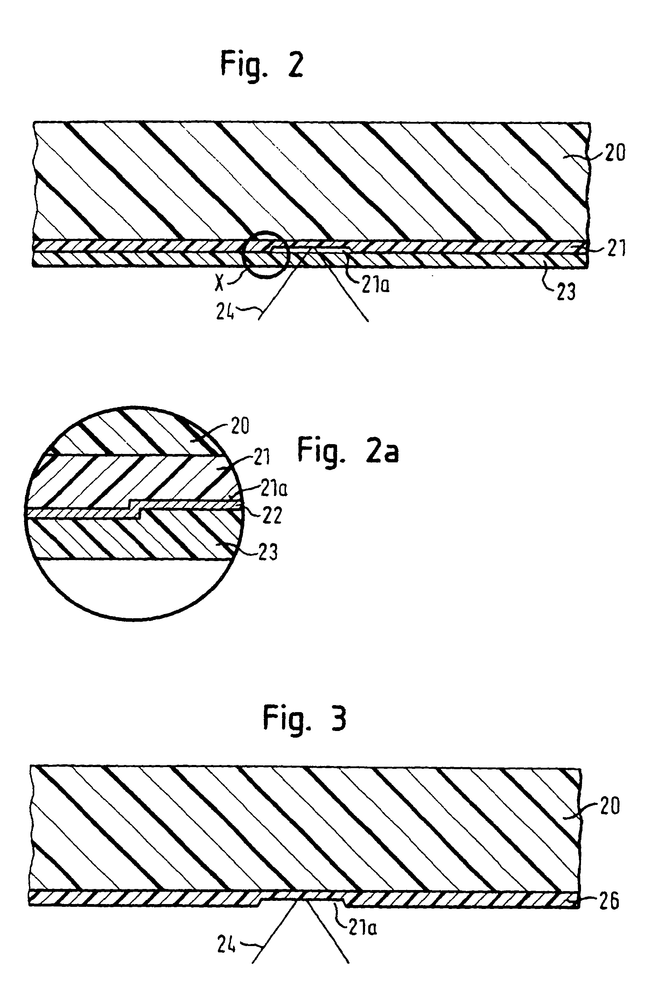

Figur 2 zeigt in erheblich vergrößerter Darstellung einen Schnitt durch eine erste Ausführungsform eines Speichermediums entsprechend einem aus dem beschichteten Band 2 in Fig. 1 ausgestanzten Nutzen. Das Speichermedium umfaßt eine Polyesterfolie 20, die mittels der Anlage nach Fig. 1 mit einer Sol-Gel-Schicht 21 (alternativ mit einer Schicht aus einem Photopolymer) versehen ist, deren von der Polyesterfolie 20 abgewandte Seite eingeprägte Pits wie etwa 21a hat. Die Schicht 21 kann einen Brechungsindex n von z.B. 1,5 haben. Nach an sich bekannten Verfahren ist diese informationstragende Seite mit einer Metallisierung 22 (vergl. Figur 2a) und schließlich mit einem Schutzlack 23 versehen worden. Der Lesestrahl 24 liest die Abfolge der eingeprägten Pits und Lands wie bei einer konventionellen CD oder CD-ROM aus.

Figur 3 zeigt einen Schnitt durch eine zweite Auführungsform des Speichermediums. Auf der Polyesterfolie 20 befindet sich eine Schicht 26 aus einem Sol-Gel auf der Basis von TiO₂. Der Brechungsindex dieser Schicht kann zwischen 2 und 2,5 liegen. Das Reflexionsvermögen der Schicht 26 ist deshalb so groß, daß auf die zusätzliche Metallisierungsschicht 21 in Fig. 2 in dieser Ausführungsform verzichtet werden kann. Insbesondere wenn dieses Speichermedium nur ein einziges Mal ausgelesen wird, um seinen Inhalt auf die Festplatte eines Rechners zu kopieren, ist auch die bei der Ausführungsform nach Fig. 2 vorhandene Schutzlackschicht 23 entbehrlich. Stattdessen kann die mittels des Lesestrahls 24 auszulesende Fläche lediglich mit einer Adhäsionsfolie (nicht dargestellt) abgedeckt sein, die vor dem Einlegen des Speichermediums in das Lesegerät bzw. das Laufwerk einfach abgezogen wird.

Weil das Speichermedium nach der Erfindung erheblich dünner als eine konventionelle CD oder CD-ROM ist, ist zum Auslesen ein Adapter empfehlenswert, der die auszulesende Oberfläche des Speichermediums nach dessen Einlegen in das Laufwerk in etwa die gleiche Ebene bringt, in der sich die auszulesende Fläche einer CD oder CD-ROM befinden würde.

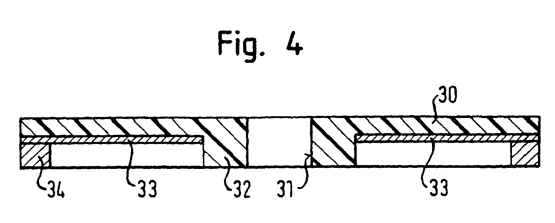

Ein geeigneter Adapter ist schematisch vereinfacht in Figur 4 im Schnitt dargestellt. Er umfaßt eine in der Regel kreisscheibenförmige Trägerplatte 30 aus Kunststoff, die ein Mittelloch 31 mit dem Durchmesser des Mittellochs einer CD in einem auf der späteren Ausleseseite vorspringenden Innenring 32 hat. Dieser dient der Zentrierung des folienartigen Speichermediums 33, beispielsweise des anhand der Fig. 2 und 3 erläuterten Aufbaus. An seinem Außenumfang ist das Speichermedium durch einen Außenring 34 fixiert. Die Dicke des Außenrings 34 und die Dicke des Innenrings 32 sind so bemessen, daß das folienartige Speichermedium 33, genauer gesagt dessen auszulesende Oberfläche, sich nach dem Einlegen des Adapters in die Schublade eines Laufwerks in derjenigen Höhe befindet, in der sich auch die informationstragende, von einer Polycarbonatschicht abgedeckte Fläche einer CD oder CD-ROM befinden würde.

## Patentansprüche

1. Verfahren zur Herstellung eines Substrats zur Fertigung von optischen Speichermedien, in denen die Informationen seriell in Form von Pits und Lands gespeichert sind, wobei
- ein Kunststofffolienband kontinuierlich mit einem flüssigen, UV-härtbaren Material in einer vorgegebenen Schichtdicke beschichtet wird, **dadurch gekennzeichnet,**
- **daß** anschließend die Beschichtung des Bandes durch Wärmezufuhr im ggf. getakteten Durchlauf bis zum Erreichen eines nicht mehr fließfähigen jedoch noch prägbaren Zustandes getrocknet wird und
- **daß** das beschichtete Band zur weiteren Verwendung aufgewickelt wird.

2. Verfahren zur Fertigung von optischen Speichermedien, in denen die Informationen seriell in Form von Pits und Lands gespeichert sind, wobei
- ein Kunststofffolienband kontinuierlich mit einem flüssigen, UV-härtbaren Material in einer vorgegebenen Schichtdicke beschichtet wind, **dadurch gekennzeichnet,**
- **daß** anschließend die Beschichtung des Bandes durch Wärmezufuhr im ggf. getakteten Durchlauf bis zum Erreichen eines nicht mehr fließfähigen jedoch noch prägbaren Zustandes getrocknet wird,
- **daß** das beschichtete Band zwischen zwei Walzen hindurchgeführt wird, von denen die der Beschichtungsseite zugewandte Walze ein Oberflächenrelief trägt, das das Negativ mindestens eines Nutzens des Oberflächenreliefs des zu fertigenden Speichermediums ist und dieses in die Beschichtung prägt,
- **daß** das Band anschließend zum Aushärten der Beschichtung unter einer UV-Strahlungsquelle hindurchgeführt wird,
- **daß** die Nutzen aus dem Band gestanzt werden und
- **daß** gleichzeitig oder in einem getrennten Schritt in die Nutzen ein Mittelloch gestanzt wird.

3. Verfahren nach Anspruch 1 oder 2, **dadurch gekennzeichnet, daß** das Beschichtungsmaterial ein lösungsmittelhaltiges Photopolymer ist.

4. Verfahren nach Anspruch 1 oder 2, **dadurch gekennzeichnet, daß** das Beschichtungsmaterial ein lösungsmittelhaltiges, strahlungsvernetzbares Sol-Gel ist.

5. Verfahren nach einem der Ansprüche 1 bis 4, **dadurch gekennzeichnet, daß** die Viskosität des flüssigen Beschichtungsmaterials zwischen 10 und 100 mPa/s liegt.

6. Verfahren nach einem der Ansprüche 1 bis 5, **dadurch gekennzeichnet, daß** die Viskosität des Beschichtungsmaterials nach dem Trocknen zwischen 20 und 100 Pa/s liegt.

7. Verfahren nach einem der Ansprüche 1 bis 6, **dadurch gekennzeichnet, daß** die Schichtdicke des flüssigen Beschichtungsmaterials zwischen 2 und 100 µm liegt.

8. Verfahren nach einem der Ansprüche 1 bis 7, **dadurch gekennzeichnet, daß** die Schichtdicke des Beschichtungsmaterials nach dem Trocknen zwischen 1 und 50 µm liegt.

9. Verfahren nach einem der Ansprüche 1 bis 8, **dadurch gekennzeichnet, daß** die Transportgeschwindigkeit des zu beschichtenden Bandes zwischen 20 und 50 m/min liegt und vorzugsweise ca. 25 m/min beträgt.

10. Verfahren nach einem der Ansprüche 1 bis 9, **dadurch gekennzeichnet, daß** die Trocknungstemperatur des beschichteten Bandes zwischen Raumtemperatur und ca. 150°C und vorzugsweise zwischen 50 und 90°C gewählt wird.

11. Verfahren nach einem der Ansprüche 2 bis 10, **dadurch gekennzeichnet, daß** die Prägegeschwindigkeit auf 10 bis 50 m/min und vorzugsweise auf ca. 25 m/min eingestellt wird.

12. Verfahren nach Anspruch 4, **dadurch gekennzeichnet, daß** das lösungsmittelhaltige Beschichtungsmaterial, insbesondere das Sol-Gel, zur Strahlungsvernetzung mit 50 bis 400 mJ/cm² solange bestrahlt wird, bis die Aushärtung zur dauerhaften Fixierung der Prägung ausreicht.

13. Verfahren nach Anspruch 12, **dadurch gekennzeichnet, daß** zur Vernetzung Strahlung mit einer Wellenlänge zwischen ca. 200 und ca. 500 nm verwendet wird.

14. Verfahren nach einem der Ansprüche 1 bis 13, **dadurch gekennzeichnet, daß** die Schichtdicke der Beschichtung nach dem Trocknen gemessen und in einen Regelkreis zur Konstanthaltung der Schichtdicke eingespeist wird.

15. Verfahren nach einem der Ansprüche 1 bis 14, **dadurch gekennzeichnet, daß** die Tiefe des Oberflächenreliefs nach der UV-Härtung gemessen wird und in einen, den Andruck der Prägewalze steuernden Regelkreis eingespeist wird.

16. Verfahren nach einem der Ansprüche 1 bis 15, **dadurch gekennzeichnet, daß** die Nutzen zumindest einseitig metallisiert werden.

17. Verfahren nach einem der Ansprüche 1 bis 15, **dadurch gekennzeichnet, daß** die profilierte Seite der Nutzen mit einem Schutzlack versehen wird.

18. Verfahren nach einem der Ansprüche 1 bis 17, **dadurch gekennzeichnet, daß** jeder Nutzen mit einem Außenring und einem Innenring versehen wird.

19. Verfahren nach einem der Ansprüche 1 bis 18, **dadurch gekennzeichnet, daß** der Kunststoff für das Kunststofffolienband aus der Gruppe der Polyester oder der der Polycarbonate ausgewählt wird.

## Claims

1. Method for making a substrate for the production of storage media, in which the data are stored in serial form with pits and lands, whereby:
- a strip of synthetic film is coated in a continuous process with a fluid, UV-hardenable material to a preset coating thickness, **characterised by** the fact that
- the coating on the strip is then dried by application of heat in a cyclical process if necessary, until a condition is achieved that is no longer fluid by is still stampable and
- the coated strip is wound for future use.

2. Method for producing optical storage media, in which the data are stored in serial form with pits and lands, whereby:
- a strip of synthetic film is coated in a continuous process with a fluid, UV-hardenable material to a preset coating thickness, **characterised by** the fact that
- the coating on the strip is then dried by application of heat in a cyclical process if necessary, until a condition is achieved that is no longer fluid but is still stampable,
- the coated strip is passed between two rollers, of which the roller facing the coating side has a surface relief which is the negative of at least one panel of the surface relief of the storage medium to be produced and stamps this in the coating,
- the strip is then routed for hardening of the coating under a UV radiation source,
- the panel is punched out of the strip and
- a centre hole is punched in the panel at the same time or in a separate step.

3. Method according to claim 1 or 2, **characterised by** the fact that the coating material is a photopolymer containing solvent.

4. Method according to claim 1 or 2, **characterised by** the fact that the coating material is a radiation cross-linking Sol-Gel containing solvent.

5. Method according to any of claims 1 to 4, **characterised by** the fact that the viscosity of the fluid coating material is between 10 and 100 mPa/s.

6. Method according to any of claims 1 to 5, **characterised by** the fact that the viscosity of the coating material after drying is between 20 and 100 Pa/s.

7. Method according to any of claims 1 to 6, **characterised by** the fact that the film thickness of the fluid coating material is between 2 and 100 µm.

8. Method according to any of claims 1 to 7, **characterised by** the fact that the film thickness of the coating material after drying is between 1 and 50 µm.

9. Method according to any of claims 1 to 8, **characterised by** the fact that the conveyor speed of the strip to be coated is between 20 and 50 m/min and is preferably approximately 25 m/min.

10. Method according to any of claims 1 to 9, **characterised by** the fact that the drying temperature of the coated strip is selected between room temperature and approximately 150 °C and is ideally between 50 and 90 °C.

11. Method according to any of claims 2 to 10, **characterised by** the fact that the stamping rate is set at 10 to 50 m/min and is ideally approximately 25 m/min.

12. Method according to claim 4, **characterised by** the fact that the coating material containing solvent, in particular Sol-Gel, is radiated at 50 to 400 mJ/cm² for radiation cross-linking until such time as hardening is sufficient for stamping to be fixed permanently.

13. Method according to claim 12, **characterised by** the fact that for cross-linking, radiation is applied with a wavelength of between approximately 200 and approximately 500 nm.

14. Method according to any of claims I to 13, **characterised by** the fact that the film thickness of the coating is measured after drying and relayed in a control circuit to maintain the film thickness constant.

15. Method according to any of claims 1 to 14, **characterised by** the fact that the depth of the surface relief is measured after UV hardening and relayed in a control circuit that controls the contact pressure of the stamping roller.

16. Method according to any of claims 1 to 15, **characterised by** the fact that the panel is metallised, on one side at least.

17. Method according to any of claims 1 to 15, **characterised by** the fact that protective lacquer is applied to the profile side of the panel.

18. Method according to any of claims 1 to 17, **characterised by** the fact that each panel has an outer ring and an inner ring.

19. Method according to any of claims 1 to 18, **characterised by** the fact that the synthetic material for the synthetic film strip is selected from the polyester or polycarbonate group.

## Revendications

1. Procédé de fabrication d'un substrat pour la fabrication de milieux optiques d'enregistrement, dans lesquels les informations sont enregistrées en série sous forme de « pits » et de « lands », dans lequel
- un ruban de film de plastique est enduit continûment en une épaisseur de couche prédéfinie par un matériau liquide durcissable aux UV, **caractérisé en ce que**
- l'enduit du ruban est ensuite séché en continu, le cas échéant de façon cadencée, par apport de chaleur jusqu'à l'atteinte d'un état qui n'est plus coulant mais encore estampable et **en ce que**
- le ruban enduit est bobiné pour utilisation ultérieure.

2. Procédé de fabrication de milieux optiques d'enregistrement, dans lesquels les informations sont enregistrées en série sous forme de « pits » et de «lands », dans lequel
- un ruban de film de plastique est enduit continûment en une épaisseur de couche prédéfinie par un matériau liquide durcissable aux UV, **caractérisé en ce que**
- l'enduit du ruban est ensuite séché en continu, le cas échéant de façon cadencée, par apport de chaleur jusqu'à l'atteinte d'un état qui n'est plus coulant mais encore estampable, **en ce que**
- le ruban enduit est envoyé entre deux rouleaux, dont celui qui se trouve du côté de l'enduction porte un relief de surface, qui est le négatif d'au moins une épreuve du relief de surface du milieu d'enregistrement à fabriquer et qui estampe celui-ci dans l'enduit, **en ce que**
- le ruban est passé ensuite sous une source de rayonnement UV pour le durcissement de l'enduit, **en ce que**
- les épreuves sont estampées à partir du ruban et **en ce que**
- un trou central est poinçonné dans l'épreuve en même temps ou lors d'une étape séparée.

3. Procédé selon la revendication 1 ou 2, **caractérisé en ce que** le matériau d'enduction est un photopolymère contenant un solvant.

4. Procédé selon la revendication 1 ou 2, **caractérisé en ce que** le matériau d'enduction est un sol-gel contenant un solvant et pouvant être réticulé par radiations.

5. Procédé selon l'une quelconque des revendications 1 à 4, **caractérisé en ce que** la viscosité du matériau d'enduction liquide est comprise entre 10 et 100 mPa/s.

6. Procédé selon l'une quelconque des revendications 1 à 5, **caractérisé en ce que** la viscosité du matériau d'enduction après le séchage est comprise entre 20 et 100 Pa/s.

7. Procédé selon l'une quelconque des revendications 1 à 6, **caractérisé en ce que** l'épaisseur de couche du matériau d'enduction liquide est comprise entre 2 et 100 µm.

8. Procédé selon l'une quelconque des revendications 1 à 7, **caractérisé en ce que** l'épaisseur de couche du matériau d'enduction après le séchage est comprise entre 1 et 50 µm.

9. Procédé selon l'une quelconque des revendications 1 à 8, **caractérisé en ce que** la vitesse de transport du ruban à enduire est comprise entre 20 et 50 m/min et qu'elle est égale de préférence à 50 m/min.

10. Procédé selon l'une quelconque des revendications 1 à 9, **caractérisé en ce que** la température de séchage du ruban enduit est choisie entre la température ambiante et env. 150 °C et de préférence entre 50 et 90 °C.

11. Procédé selon l'une quelconque des revendications 2 à 10, **caractérisé en ce que** la vitesse d'estampage est réglée de 10 à 50 m/min et de préférence à environ 25 m/min.

12. Procédé selon la revendication 4, **caractérisé en ce que** le matériau d'enduction contenant du solvant, en particulier le sol-gel, est irradié pour la réticulation par radiations aussi longtemps par 50 à 400 mJ/cm², jusqu'à ce que le durcissement suffise pour la fixation permanente de l'estampage.

13. Procédé selon la revendication 12, **caractérisé en ce qu'**une radiation d'une longueur d'onde comprise entre environ 200 et environ 500 nm est utilisée pour la réticulation.

14. Procédé selon l'une quelconque des revendications 1 à 13, **caractérisé en ce que** l'épaisseur de couche de l'enduction est mesurée après le séchage et est réinjectée dans une boucle de régulation pour le maintien de l'épaisseur de couche constante.

15. Procédé selon l'une quelconque des revendications 1 à 14, **caractérisé en ce que** la profondeur du relief de surface est mesurée après le durcissement aux UV, et est réinjectée dans une bouche de régulation commandant la pression exercée par le rouleau d'estampage.

16. Procédé selon l'une quelconque des revendications 1 à 15, **caractérisé en ce que** les épreuves sont métallisées au moins sur une face.

17. Procédé selon l'une quelconque des revendications 1 à 15, **caractérisé en ce que** la face profilée des épreuves est dotée d'un vernis de protection.

18. Procédé selon l'une quelconque des revendications 1 à 17, **caractérisé en ce que** chaque épreuve est dotée d'un anneau extérieur et d'un anneau intérieur.

19. Procédé selon l'une quelconque des revendications 1 à 18, **caractérisé en ce que** le plastique pour le ruban de film de plastique est choisi dans le groupe des polyesters ou celui des polycarbonates.
